(19) Europäisches Patentamt
European Patent Office
Office européen des brevets

(11) Publication number: 0 239 419
A2

# (12) EUROPEAN PATENT APPLICATION

(21) Application number: 87302690.0

(22) Date of filing: 27.03.87

(51) Int. Cl.[4]: C 08 L 77/00
C 09 D 3/70, C 08 G 69/40

(30) Priority: 27.03.86 GB 8607788

(43) Date of publication of application:
30.09.87 Bulletin 87/40

(84) Designated Contracting States:
AT BE CH DE ES FR GB IT LI LU NL SE

(71) Applicant: Coates Brothers PLC
Cray Avenue St. Mary Cray
Orpington Kent BR5 3PP (GB)

(72) Inventor: Wilson, Alec Frank
215 Crookston Road
Eltham London, SE9 (GB)

(74) Representative: Lamb, John Baxter et al
MARKS & CLERK 57/60 Lincoln's Inn Fields
London WC2A 3LS (GB)

## (54) Polyamides and thixotropic compositions containing them.

(57) A thixotropic composition comprises a film-forming resin and a polyamide dissolved in a solvent therefor, the polyamide being a polyetheramide derived from

(a) an amine component comprising:
(i) an aliphatic diamine;
(ii) an ether monoamine, an ether diamine or an ether triamine; and, optionally,
(iii) a monoamine other than an ether monoamine; and
(b) an acid component comprising:
(iv) an organic dicarboxylic acid; and, optionally,
(v) an organic monocarboxylic acid.

Preferred polyetheramides (which form a further feature of the invention) are derived from an amine component (a) comprising (i) aliphatic diamine and (ii) an ether triamine in mole ratio of (i):(ii) of 0.5:1 to 20:1; and an acid component (b) comprising (iii) an organic dicarboxylic acid and (iv) an organic monocarboxylic acid in a mole ratio of (iii):(iv) of 0.5:1 to 7:3.

EP 0 239 419 A2

**Description**

THIXOTROPIC COMPOSITIONS AND POLYAMIDES CONTAINING THEM

This invention relates to thixotropic compositions and to polyamide resins for use therein.

The production of thixotropic vehicles for use in paints and other surface coating compositions by incorporating polyamide resins into certain types of surface coating vehicles at elevated temperatures, e.g. 220 - 260°C, is well known. The polyamide resins used typically have molecular weights of from 3,000 to 9,000, are prepared by the reaction of dimerised and/or trimerised fatty acids with alkylene polyamines, and typically have acid and amine values of from 2-4 mgKOH/g.

In the manufacture of a thixotropic vehicle in this known manner, a surface coating vehicle containing ester groups is first prepared and then compounded with the polyamide resin at elevated temperature. This requires the application of substantial heat and careful control over the processing because if heating is continued after maximum thixotropy has developed this property rapidly falls off. In addition, at the processing temperatures employed, there is a tendency for the surface coating vehicle itself to polymerise. This complicates the operation because the surface coating vehicle has to be prepared with properties such that it acquires the desired degree of polymerisation simultaneously with the attainment of maximum thixotropy of the mixture. With certain heat sensitive vehicles, such as urethane oils and alkyds, high temperature reactions are not possible and other means of achieving thixotropy have to be employed.

In GB-A-915702 there is described the preparation of polyamides having molecular weights of about 1,000 to 3,000 and their use as thixotropic agents. Using these polyamides, thixotropic systems can be obtained by melting or dissolving the organic polyamide in an organic coating composition. This is clearly a simple and preferable method of manufacturing thixotropic compositions. In certain cases, however, particularly it the coating composition is one of low polarity or dissolving power, the products may not be entirely satisfactory in that some degree of reaction is required in order to completely solubilise the polyamide and give a satisfactory thixotropic product.

It has now been found, in accordance with the present invention, that certain polyamides, as hereinafter defined, may be reproducibly manufactured by a simple technique and may be used to impart thixotropy to a wide variety of organic liquid materials by simple dissolution therein.

According to one embodiment of the invention, therefore, there is provided a thixotropic composition comprising a film-forming resin and a polyamide dissolved in a solvent therefor, in which the polyamide is a polyetheramide derived from:

(a) an amine component comprising

(i) an aliphatic diamine;

(ii) an ether monoamine, an ether diamine or an ether triamine; and optionally

(iii) a monoamine other than an ether monoamine; and

(b) an organic carboxylic acid component comprising:

(iv) an organic dicarboxylic acid; and, optionally,

(v) an organic monocarboxylic acid.

Particularly preferred polyetheramides for use in accordance with the invention are those derived from:

(a) an amine component comprising (i) an aliphatic diamine and (ii) an ether diamine or ether triamine in a molar ratio of aliphatic diamine to ether diamine of from 0.5:1 to 20:1; and

(b) an acid component comprising (iii) an organic dicarboxylic acid and (iv) an organic monocarboxylic acid in a molar ratio of dicarboxylic acid to monocarboxylic acid of from 0.5:1 to 5:1.

These preferred polyamides are in themselves new and are provided as a further feature of the invention.

The polyetheramides may be prepared in a simple manner and the resulting thixotropy obtained by use of such products has been found to be relatively independent of the reaction time and/or temperature employed in the manufacture of the polyetheramides.

An essential feature of the polyetheramides used in the invention is that, in addition to the amines and acids commonly used in the preparation of thixogenic polyamides, they are also derived from an ether amine, by which term is meant an amine containing a hydrocarbon chain interrupted by one or more oxygen atoms or containing an oxygen-containing heterocyclic ring.

Suitable ether monoamines may be represented by the formula:

$R\text{-}O\text{-}R^1\text{-}NH_2$ (I)

in which R is an alkyl group and $R^1$ is an alkylene group. Examples of such monoamines are 3-stearyloxy-propylamine, 3-methoxy-propylamine, 3-ethoxy-propylamine and 3-(2'-ethylhexoxy)-propylamine.

Suitable ether diamines include polyoxyalkylene diamines of the formulae:

$H_2N\text{-}R^1\text{-}(OR^2)_nNH_2$ (II)

and

$H_2N\text{-}R^1\text{-}(OR^2)_a\text{-}(OR^3)_b\text{-}(OR^2)_c\text{-}NH_2$ (III)

in which $R^1$ is an alkylene group and $R^2$ and $R^3$ are different and each is an ethylene or propylene group and n, a, b and c indicate that the groups $-OR^2-$ or $-OR^3-$ may be present, on average, more than once. Specific examples of such polyoxyalkylene diamines are the products sold by Texaco under the trade designation "Jeffamine D" (formula II, $R^1 = R^2 =$ isopropylene), e.g. Jeffamine D-230 (n=2.6), Jeffamine D-400 (n=5.6);

and the products sold by Texaco under the trade designation "Jeffamine ED" (formula III, $R^1=R^2=$isopropylene, $R^3$-ethylene), e.g. Jeffamine E-600 (a+c=3.5, b=13.5), Jeffamine ED-900 (a+c=3.5, b=20.5), Jeffamine ED-2001 (a+c =3.5, b=45.5), Jeffamine ED-4000 and Jeffamine ED-6000.

Other suitable ether diamines are diamines of the formula:

$H_2N$-$R^1$-O-$R^4$-O-$R^5$-$NH_2$ (IV)

(in which $R^1$, $R^4$ and $R^5$ are each alkylene groups), such as 4,9-dioxa-dodecan-1,12-diamine; and diamines containing oxygen-containing heterocyclic groups of the formula

$H_2N$-$R^1$-$(R^6)_n$-$R^4NH_2$ (V)

in which $R^1$ and $R^4$ are each alkylene groups, $R^6$ is an oxygen-containing heterocyclic group such as tetrahydrofuran ring, and n indicates that the groups $R^6$ may be present, on average, more than once. Specific examples of the diamines of formula V are the bis-3-aminopropyl polytetrahydrofurans sold by BASF having average molecular weights of 750, 1100 and 2100.

Suitable ether triamines are polyoxyalkylene triamines of the formula:

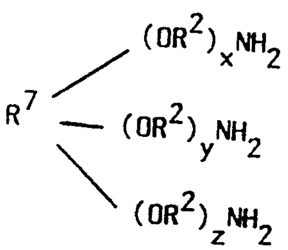

(VI)

in which $R^7$ is a trivalent aliphatic group, $R^2$ is an ethylene or propylene group and x, y and z indicate that each of the groups -$OR^2$- may be present, on average, more than once. Specific examples of such triamines are those sold by Texaco under the trade designation "Jeffamine T" ($R^7$=propylidyne, $R^2$=isopropylene), e.g. Jeffamine T-403, Jeffamine T-300 and Jeffamine T-5000.

In addition to the ether amine, the amine component from which polyetheramides are derived must contain an aliphatic diamine and this is preferably an $\alpha$, $\omega$-diprimary aliphatic diamine, especially a $C_2$-$C_6$ $\alpha$,$\omega$-diprimary polymethylene diamine such as ethylene diamine or 1,6-hexamethylene diamine.

The ratio of ether amine to aliphatic diamine may vary widely depending on factors such as the molecular weight of the final polyether amide and the nature and molecular weight of the ether amine. In practice, however, it has been found that a molar ratio of ether amine to aliphatic diamine of from 0.05:1 to 2:1 is satisfactory, the preferred molar ratio of ether amine to aliphatic diamine being from 0.1:1 to 1:1.

The dicarboxylic acids used in the preparation of the polyetheramides are, in general, those usually used in the preparation of thixogenic polyamides. Preferred dicarboxylic acids are the dimerised fatty acids or so-called "dimer acids" and mixtures of these with aliphatic dicarboxylic acids in which the carboxyl groups are separated by four or more carbon atoms such as adipic acid, sebacic acid and azeleic acid. Mixtures of dimer acids and aromatic acids such as isophthalic acid may also be used but in general the use of such acids contributes little to the level of thixotropy obtained.

The amine component may contain a monoamine and/or the acid component may contain a monocarboxylic acid in order to control the molecular weight of the final polyamide. As will be appreciated, ether monoamines may serve as monoamine for this purpose but monofunctional aliphatic amines such as dodecylamine may also be used. Typical monocarboxylic acids which may be used for the control of molecular weight are saturated and unsaturated fatty acids and benzoic acid and its homologues.

Preferred monocarboxylic acids are $C_{12}$-$C_{12}$ saturated or unsaturated fatty acids such as stearic acid, palmitic acid, oleic acid, tall oil fatty acids and behenic acid.

The use of monocarboxylic acids as molecular weight control agents is preferred since, in addition to this function, their presence has been found to have a useful effect on thixotropy and, to this end, the molar ratio of dicarboxylic acid to monocarboxylic acid and is preferably from 0.5:1 to 5:1, more preferably from 0.5:1 to 3:1.

The polyetheramide resins are prepared in a generally conventional manner, for example by reacting the amine and acid components together (generally in substantially stoichiometric amounts)at a temperature of from 200 to 260°C with removal of water of reaction. It is generally preferred that the reaction be carried out under conditions such that a random polyetheramide be obtained, i.e. reaction is carried out at relatively elevated temperature and/or the various components of the polyetheramide are added together rather than sequentially which might result in the formation of a block-type copolymer. It is believed that if the polyetheramide is produced under conditions such that a block co-polyetheramide is prepared it may well be difficult to reproducibly produce the polyetheramide whereas by producing a random copolymer reproducible levels of thixotropy are obtained.

The final polyetheramides suitably have acid values of up to 10 mgKOH/gm and amine values of up to 10 mgKOH/gm. Generally the polyetheramides will have a molecular weight of from 1,000 to 10,000, those having lower molecular weights in this range (e.g. 1,000 to 5,000) being generally preferred.

The polyetheramide resins of the invention may be used to impart thixotropy to or thicken a wide variety of organic liquid materials, especially surface coating compositions comprising solutions, in appropriate

solvents, of, for example, drying and semi-drying oils, alkyd resins, urethane oils and alkyds, oleoresinous varnishes, acrylic resins, polyester resins and epoxy resins. In addition the polyetheramides can be used to impart thixotropy to a variety of aliphatic and aromatic hydrocarbon solvents and petroleum distillate fractions such as kerosene, gasolene, lube oils, gas oils and fuel oils. It is noteworthy that, in the field of surface coating compositions, the polyetheramides may be used to impart thixotropy not only to compositions containing white spirit as solvent but also to compositions thinned with aromatic hydrocarbons such as xylol or mixtures of aromatic hydrocarbons and alcohols such as xylol:butanol. Further the polyetheramides of the invention are capable of imparting thixotropy to materials which cannot be thickened by conventional reaction with polyamides at elevated temperatures, such as thermoplastic and thermosetting acrylic resins and heat sensitive polyurethane oils and alkyds.

In general, the polyetheramide resins are used to impart thixotropy to a composition or solvent by adding the resin to the composition or solvent and dissolving it therein by simply warming, for example to a temperature of 80-100°C.

In order that the invention may be well understood the following examples are given by way of illustration only.

Example I

Tall oil fatty acids (60g) dimer acid (224g), ethylene diamine (24g) and Jeffamine ED2001 (200g), were reacted under reflux for 1 hr and then heated to 230°C under conditions of distillation in 2 hrs. The temperature was maintained at 230°C until no more water distilled off. The product was a solid slightly opaque resin; acid value (AV) = 4.3 mgKOH/g, Amine Value (Am.V) = 5.5mgKOH/g.

Example 2

The resin of Example 1 was reacted for a further 3 hrs at 230°C. The product had an Av of 3.2 and an am.V of 4.5 mgKOH/g.

Example 3

A polyamide was prepared as described in Example 1 using a mixture of dimer acid (168g) and sebacic acid (20g) as acid components. The solid resin had an Av of 4.7 and an Am.V of 3.9.

Example 4

A polyamide was prepared as described in Example 1 except that the tall oil fatty acids were replaced by an equal weight of stearic acid. The resultant solid resin had an Av of 5.1 and an Am.V of 3.5.

Example 5

Tall oil fatty acids (126g), dimer acid (252g), ethylene diamine (27g) and Jeffamine T403 (68g) were reacted together under the conditions described in Example 1. The product was a soft/tacky clear resin; AV of 5.7, Am.V of 4.3.

Example 6

Tall oil fatty acids (112g), dimer acid (224g), ethylene diamine (24g) and Jeffamine ED600 (120g) were reacted at 240°C for 3 hrs. The resultant resin had an AV of 4.6 and an Am.V of 3.1.

Example 7

Dimer acid (336g), ethylene diamine (24g) and 3-stearyl oxypropylamine (131g) were reacted together at 250°C for 3 hrs. The product was a soft slightly tacky resin and had an AV of 3.9 and an am.V of 3.4.

Example 8

Tall oil fatty acids (112g), dimer acid (224g), ethylene diamine (24g) and bis(3 amino propyl)polytetrahydrofuran (150g) were reacted together at 240°C fr 4 hrs. The resultant clear soft resin obtained had an AV of 4.6 and an Am.V of 3.7.

Example 9

The procedure of Example 1 was repeated using Jeffamine D2000 (210g) in place of Jeffamine ED2001. The resultant resin was softer than that of Example 1 and had an Av of 4.3 and an Am.V of 4.0.

Example 10

Tall oil fatty acids (42g), dimer acid (168g), ethylene diamine (18g) and Jeffamine T5000 (285g) were reacted together at 240°C for 4 hrs. The product had an Av of 6.2 and an Am.V of 2.7.

Example 11

Dimer acid (370g), ethylene diamine (26.4g) and 3-ethoxy propylamine (45.3g) were reacted together at 240°C for 3 hrs. The resultant clear soft tacky resin had an AV of 4.2 and an Am.V of 3.1.

Example 12

The product of Example 1 was repeated using hexamethylene diamine (46.4g) in place of ethylene diamine. The resultant solid resin had an AV of 2.6 and an Am.V of 3.1.

The polyamide resins of Examples 1-12 were tested for thixotropic effect in a variety of vehicles and solvents. In the case of the vehicles, 5% by weight of the polyamide (on resin solids) was dissolved into the vehicle by warming to 80°C and then allowing to stand overnight at ambient temperature. A 5% level was also employed for test with the solvents alone.

The results are shown in the following table.

| Ex. No. | VEHICLE | SOLVENT | NON-VOLATILE % | PRODUCT |
|---|---|---|---|---|
| 1 & 2 | 65% oil length Soya-penta alkyd | White Spirit | 60 | Clear & similar gels |
| " | 55% O.L. linseed epoxy ester | " | 60 | " |
| " | 65% O.L. Soya Urethane alkyd | " | 55 | " |
| " | 65% O.L. Soya Urethane oil | " | 60 | " |
| " | Hydroxy functional acrylic resin | Xylol | 55 | Clear gel |
| " | 100poise linseed stand oil | - | 100 | " |
| 3 | 45% O.L. linoleic-glycerol alkyd | Xylol | 50 | " |
| " | 40% O.L. linoleic-mixed polyol alkyd | 4:1 Xylol:butanol | 60 | " |
| 4 | 65% O.L. Soya-penta alkyd | White Spirit | 60 | " |
| " | 45% O.L. Linoleic-glycerol alkyd | Xylol | 50 | " |
| " | Saturated polyester resin | 3:1 Xylol:butanol | 80 | " |
| 5-12 | 65% O.L. Soya-penta alkyd | White Spirit | 60 | Clear gels |
| 3 | 40.% O.L. Linoleic-mixed polyol alkyd | 4:1 Xylol:butanol | 60 | Clear weak gel |
| 9 | - | White Spirit | 0 | hazy weak gel |
| " | - | Xylol | 0 | Clear gel |
| " | - | Petrol | 0 | Clear gel |

Paint Based on Patent Example

5% (on resin solids) of the thixogen of Example 1 was dissolved in a long oil soya-penta alkyd of a type used widely for the production of decorative products.

Alkyd properties were as follows:-

Oil length % - 65
Non volatile % - 65
Solvent - White spirit
Viscosity (c.stoke.) -3,500 - 4,500
Hydroxyl value mgKOH/g - 60

On cooling overnight the products formed a star bright gel.

A white gloss paint was made to the following formulation:-

Thixotropic alkyd 193.24 parts by weight
Rutile titanium dioxide 100.00 parts by weight
White spirit 51.11 parts by weight
G.P. driers 6.6 parts by weight
Methyl ethyl ketoxime (10%) 6.6 parts by weight

A mill base was made using a pigment:binder ratio of 4:1. After 10 minutes high speed shear the remaining resin was added and the paint thinned to 3 poise with white spirit. The properties of the paint were compared with a commercial dripless type of paint made from the same alkyd (70 pts) and a concentrated thixotropic alkyd (30 pts) made according to the prior art high temperature process and was found to be completely acceptable. The two paints had the following properties:

| | Paint using thixogen of Ex. 1 | Commercial Paint |
|---|---|---|
| Viscosity (poise) | 3.0 | 3.0 |
| Paint Solids (%) | 65.3 | 62.1 |
| Flow | Excellent | Moderate |
| Gloss % 20°/60° | 79/88 | 81/90 |

**Claims**

1. A thixotropic composition comprising a film-forming resin and a polyamide dissolved in a solvent therefor, characterized in that the polyamide is a polyetheramide derived from:
   (a) an amine component comprising:
   (i) an aliphatic diamine;
   (ii) an ether monoamine, an ether diamine or an ether triamine; and, optionally,
   (iii) a monoamine other than an ether monoamine; and
   (b) an acid component comprising:
   (iv) an organic dicarboxylic acid; and, optionally,
   (v) an organic monocarboxylic acid.

2. A thixotropic composition as claimed in claim 1 in characterized in that the polyetheramide is one derived from
   (a) an amine component comprising (i) an aliphatic diamine and (ii) an ether diamine or ether triamine in a molar ratio of aliphatic diamine to ether diamine of from 0.5:1 to 20:1, and
   (b) an acid component comprising (iii) an organic dicarboxylic acid and (iv) an organic monocarboxylic acid in a molar ratio of dicarboxylic acid to monocarbocyclic acid of from 0.5:1 to 5:1.

3. A composition as claimed in claim 1 or claim 2 in characterized in that the aliphatic diamine is a $C_2$-$C_6$ $\alpha,\omega$-polymethylene diamine.

4. A polyetheramide derived from (a) an amine component comprising (i) an aliphatic diamine and (ii) an ether diamine or ether triamine in a molar ratio of aliphatic diamine to ether amine of from 0.5:1 to 20:1; and (b) an acid component comprising (iii) an organic dicarboxylic and (iv) an organic monocarboxylic

acid in a molar ratio of dicarboxylic acid to monocarboxylic acid of from 0.5:1 to 5:1.